(19) Europäisches Patentamt / European Patent Office / Office européen des brevets

(11) **EP 4 535 227 A1**

(12) **EUROPEAN PATENT APPLICATION**
published in accordance with Art. 153(4) EPC

(43) Date of publication:
**09.04.2025 Bulletin 2025/15**

(21) Application number: **23815546.9**

(22) Date of filing: **28.03.2023**

(51) International Patent Classification (IPC):
**G06K 19/02** *(2006.01)* **G06K 19/077** *(2006.01)*
**H01Q 9/16** *(2006.01)*

(52) Cooperative Patent Classification (CPC):
**G06K 19/02; G06K 19/077; H01Q 9/16**

(86) International application number:
**PCT/JP2023/012599**

(87) International publication number:
**WO 2023/233784 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.06.2022 JP 2022090453**

(71) Applicant: **Nitta Corporation**
**Osaka-shi, Osaka 556-0022 (JP)**

(72) Inventors:
• **SHIMAI, Toshiharu**
  **Yamatokoriyama-shi, Nara 639-1085 (JP)**
• **TOMITA, Hayato**
  **Yamatokoriyama-shi, Nara 639-1085 (JP)**
• **MIYAGI, Yoshihiro**
  **Yamatokoriyama-shi, Nara 639-1085 (JP)**
• **MURAYAMA, Miki**
  **Yamatokoriyama-shi, Nara 639-1085 (JP)**

(74) Representative: **Strehl & Partner mbB**
**Maximilianstrasse 54**
**80538 München (DE)**

(54) **IC TAG AND MANUFACTURING METHOD FOR SAME**

(57) Provided are an IC tag and a manufacturing method therefor which are capable of preventing an antenna from being damaged even when the IC tag is repeatedly subjected to external forces such as bending. The IC tag according to the present invention includes: an IC chip 2; an antenna 3 that electrically transmits and receives information stored in the IC chip 2; a sheet-like substrate 1 that supports the IC chip 2 and the antenna 3; and a resin protective layer 4 which is a dielectric covering the IC chip 2 and the antenna 3 between the resin protective layer 4 and the substrate 1, in which a tensile modulus [GPa] of the substrate 1 and a tensile modulus [GPa] of the protective layer 4 are defined within an area surrounded by five lines represented by the following formulas (1), (2), (3), (4), and (5), with the tensile modulus of the substrate 1 on an X-axis and the tensile modulus of the protective layer 4 on a Y-axis.

$$X = 0.8 \quad \dots (1)$$

$$X = 8 \quad \dots (2)$$

$$Y = 0.03 \quad \dots (3)$$

$$Y = X^{0.4} \quad \dots (4)$$

$$Y = 0.01 \times X^2 \quad \dots (5)$$

FIG. 5

# EP 4 535 227 A1

**Description**

Technical Field

The present invention relates to an IC tag and a manufacturing method therefor.

Background Art

In recent years, as one type of IC tag, there has been proposed a configuration in which an antenna pattern for radio communication and an IC chip are mounted on a base sheet made of plastic or paper called an inlet. Such an inlet sealed with a resin is attached to an article or embedded in the article to be used for managing the article.

Citation List

Patent Literature

Patent Literature 1: WO2009/011041

Summary of Invention

Technical Problem

Incidentally, the above IC tag may be used in a severe environment in which the IC tag is subjected to external forces such as bending, which may cause the resin for protecting the antenna to peel off and damage the antenna. When the antenna is damaged, a communication performance may deteriorate or communication may become impossible. In particular, a laundry tag used for clothes, linen, and the like is required to have durability against repeated washing or drying in a drying machine.
The present invention has been made to solve the above problem, and an object of the present invention is to provide an IC tag and a manufacturing method therefor which can prevent an antenna from being damaged even when the IC tag is repeatedly subjected to external forces such as bending.

Solution to Problem

An IC tag according to the present invention includes: an IC chip; an antenna that electrically transmits and receives information stored in the IC chip; a sheet-like substrate that supports the IC chip and the antenna; and a resin protective layer which is a dielectric covering the IC chip and the antenna between the resin protective layer and the substrate, in which a tensile modulus [GPa] of the substrate and a tensile modulus [GPa] of the protective layer are defined within an area surrounded by five lines represented by the following formulas (1), (2), (3), (4), and (5), with the tensile modulus of the substrate on an X-axis and the tensile modulus of the protective layer on a Y-axis.

$$X = 0.8 \quad ...(1)$$

$$X = 8 \quad ...(2)$$

$$Y = 0.03 \quad ...(3)$$

$$Y = X^{0.4} \quad ...(4)$$

$$Y = 0.01 \times X^2 \quad ...(5)$$

A method for manufacturing an IC tag according to the present invention includes: a step of forming, on a sheet-like substrate, an IC chip and an antenna that electrically transmits and receives information stored in the IC chip; a step of disposing a sheet-like resin material, which is a dielectric, on the substrate to cover the IC chip and the antenna; and a step of forming a protective layer along the IC chip and the antenna on the substrate by heating and pressing the resin material, in which the substrate and the resin material are selected such that a tensile modulus [GPa] of the substrate and a tensile modulus [GPa] of the protective layer are defined within an area surrounded by five lines represented by the following

2

formulas (1), (2), (3), (4), and (5), with the tensile modulus of the substrate on an X-axis and the tensile modulus of the protective layer on a Y-axis.

$$X = 0.8 \quad \ldots (1)$$

$$X = 8 \quad \ldots (2)$$

$$Y = 0.03 \quad \ldots (3)$$

$$Y = X^{0.4} \quad \ldots (4)$$

$$Y = 0.01 \times X^2 \quad \ldots (5)$$

Advantageous Effects of Invention

According to the IC tag and the manufacturing method therefor according to the present invention, a bending resistance of the IC tag can be improved.

Brief Description of Drawings

FIG. 1 is a plan view showing an embodiment of an IC tag according to the present invention.

FIG. 2 is a cross-sectional view of the IC tag of FIG. 1.

FIG. 3 is a cross-sectional view showing another example of the IC tag of FIG. 1.

FIG. 4 is a view showing a bending test of the IC tag.

FIG. 5 is a graph showing results of the bending test, with a tensile modulus of a substrate on an X-axis and a tensile modulus of a protective layer on a Y-axis.

Description of Embodiments

<1. Overview of IC Tag>

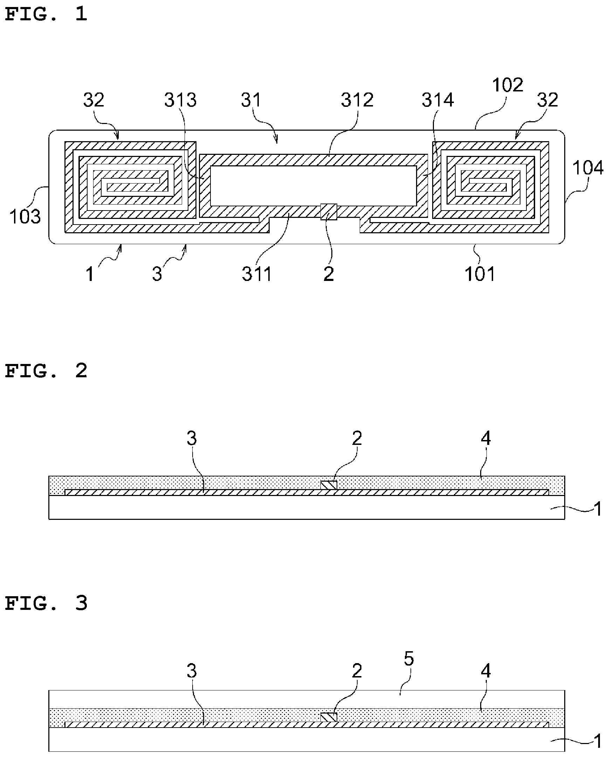

Hereinafter, an embodiment of an IC tag according to the present invention will be described with reference to the drawings. FIG. 1 is a plan view of the IC tag according to the present embodiment, and FIG. 2 is a cross-sectional view of FIG. 1. As shown in FIGS. 1 and 2, the IC tag according to the present embodiment includes a sheet-like substrate 1 formed in a rectangular shape, an IC chip 2 and an antenna 3 disposed on the substrate 1, and a protective layer 4 that is formed in a rectangular shape and that covers the IC chip 2 and the antenna 3. Hereinafter, each member will be described in detail.

The substrate 1 is made of a material having a tensile modulus of 0.8 GPa to 8 GPa. As long as the tensile modulus is 0.8 GPa to 8 GPa, the material constituting the substrate 1 is not particularly limited, and can be, for example, a polyester-based resin such as polyethylene, polypropylene, polyvinyl chloride, and polyethylene terephthalate, and a polyimide-based resin. A thickness of the substrate 1 is, for example, preferably 25 $\mu$m to 200 $\mu$m, and further preferably 50 $\mu$m to 150 $\mu$m.

Hereinafter, for convenience of description, as shown in FIG. 1, sides of the substrate 1 and the protective layer 4 in a longitudinal direction are referred to as a first side 101 and a second side 102, and sides in a lateral direction are referred to as a third side 103 and a fourth side 104. Therefore, these sides are connected in order of the first side 101, the third side 103, the second side 102, and the fourth side 104.

The IC chip 2 is known one having a memory function and is electrically connected to the dipole antenna 3 implemented by a conductor.

In the present embodiment, the dipole antenna as shown in FIG. 1 is used as an example. That is, the dipole antenna 3 includes an impedance matching portion 31 disposed in the vicinity of a center in the longitudinal direction of the substrate 1, and a pair of dipole portions 32 extending from the impedance matching portion 31 in the longitudinal direction of the substrate 1. The impedance matching portion 31 is formed in a rectangular frame shape having first to fourth sides. More specifically, a first side 311 of the impedance matching portion 31 is disposed at a position slightly away from the first side 101 of the substrate 1, and a second side 312 is disposed along the second side 102 of the substrate 1. That is, the impedance matching portion 31 has the first side 311, a third side 313, the second side 312, and a fourth side 314 connected in this order. The IC chip 2 is disposed in the vicinity of a center of the first side 311 of the impedance matching portion 31 or at a position slightly deviated therefrom.

The dipole portion 32 has a bilaterally symmetrical shape, and thus only a left side in FIG. 1 will be described. The dipole portion 32 extends from the first side 311 of the impedance matching portion 31 toward the first side 101 of the substrate 1, extends therefrom along the first side 101, the third side 103, and the second side 102 of the substrate 1, forms a rectangular shape frame along the third side 313 of the impedance matching portion 31, and then extends inside the frame in a spiral shape. A thickness of the dipole antenna 3 is not particularly limited, and can be set to 5 $\mu$m to 20 $\mu$m.

The material constituting the dipole antenna 3 is not particularly limited, and can be, for example, silver, copper, or aluminum. When silver is used, the dipole antenna 3 can be formed by applying a silver paste containing silver onto the substrate 1 by screen printing. On the other hand, when copper or aluminum is used, the dipole antenna 3 can be formed by etching. In addition, the IC chip 2 can be fixed to the antenna 3 with an adhesive, or can be fixed to the antenna 3 by known flip-chip mounting for electronic components. A thickness of the IC chip 2 is not particularly limited, and can be set to 100 $\mu$m to 150 $\mu$m.

With the dipole antenna 3 as described above, for example, information stored in the IC chip 2 can be transmitted and received by radio waves in a UHF band.

A tensile modulus of the protective layer 4 is set to a numerical value in an area above a line represented by $Y = 0.03$ and above a line represented by $Y = 0.01 \times X^2$, and in an area below a line represented by $Y = X^{0.4}$ in a graph with the tensile modulus [GPa] of the substrate 1 on an X-axis and the tensile modulus [GPa] of the protective layer 4 on a Y-axis.

In other words, the tensile modulus of the substrate 1 and the tensile modulus of the protective layer 4 are defined within an area surrounded by five lines represented by the following formulas (1), (2), (3), (4), and (5), with the tensile modulus [GPa] of the substrate 1 on the X-axis and the tensile modulus [GPa] of the protective layer 4 on the Y-axis.

$$X = 0.8 \quad \dots (1)$$

$$X = 8 \quad \dots (2)$$

$$Y = 0.03 \quad \dots (3)$$

$$Y = X^{0.4} \quad \dots (4)$$

$$Y = 0.01 \times X^2 \quad \dots (5)$$

The protective layer 4 is made of a resin material, which is a dielectric. The protective layer 4 can be made of a material containing, for example, an acrylic-based thermosetting resin, an ester-based thermosetting resin, an epoxy-based thermosetting resin, or a polyimide-based thermosetting resin as a main component. For example, when an epoxy-based thermosetting resin is used, a novolac type epoxy resin, a bisphenol type epoxy resin, a biphenyl type epoxy resin, an alicyclic type epoxy resin, a cyclopentadiene type epoxy resin, and the like can be used. Even when the other acrylic-based thermosetting resin, ester-based thermosetting resin, and polyimide-based thermosetting resin are adopted, various materials can be adopted without particular limitation. The protective layer 4 may cover the dipole antenna 3 and the IC chip 2, and a thickness from the substrate 1 is, for example, preferably 25 $\mu$m to 150 $\mu$m, and further preferably 50 $\mu$m to 100 $\mu$m. The tensile modulus can be measured according to IPC-TM-650.

<2. Method for Manufacturing IC Tag>

The IC tag configured as described above can be formed by using various methods, for example, the following method. First, the dipole antenna 3 is formed on the substrate 1 by using the above method such as screen printing or etching. Then, the IC chip 2 is fixed on the dipole antenna 3 by using the above method. Next, a sheet-like resin material having the same size as the substrate 1 and serving as the protective layer 4 is disposed on the substrate 1 so as to cover the dipole antenna 3 and the IC chip 2. Subsequently, the resin material is pressed while being heated by a plate. Accordingly, the resin material is bonded to the substrate 1 so as to cover the dipole antenna 3 and the IC chip 2 while being deformed to conform to shapes of the dipole antenna 3 and the IC chip 2. Thus, the IC tag is completed.

<3. Features>

As described above, according to the present embodiment, the dipole antenna 3 is formed on the substrate 1 having a tensile modulus of 0.8 GPa to 8 GPa, and the IC chip 2 is fixed on the dipole antenna 3. When the tensile modulus of the substrate 1 is too small, the substrate 1 becomes too soft, and the dipole antenna 3 is more likely to be broken or peeled off from the substrate 1 due to bending, and therefore, in the present embodiment, in order to prevent such breaking or peeling of the dipole antenna 3, the tensile modulus of the substrate 1 is set to 0.8 GPa or more. In addition, when the tensile modulus of the substrate 1 is too large, the substrate 1 becomes too hard and is more likely to be cracked at the time of being bent, and therefore, in the present embodiment, in order to prevent such cracking, the tensile modulus of the substrate 1 is set to 8 GPa or less.

Furthermore, according to the present embodiment, the tensile modulus [GPa] of the protective layer 4 is set to a numerical value in the area above the line represented by $Y = 0.03$ and above the line represented by $Y = 0.01 \times X^2$, and in the area below the line represented by $Y = X^{0.4}$ in the graph with the tensile modulus [GPa] of the substrate 1 on the X-axis and the tensile modulus [GPa] of the protective layer 4 on the Y-axis. It was found that when the tensile modulus of the protective layer 4 is smaller than the tensile modulus of the substrate 1 and is smaller than the line represented by $Y = 0.01 \times X^2$, repeated bending can easily cause peeling at an interface between the substrate 1 and the protective layer 4. In addition, it was found that when the tensile modulus of the protective layer 4 is larger than the tensile modulus of the substrate 1 and is larger than the line represented by $Y = X^{0.4}$, the repeated bending can also easily cause the peeling at the interface between the substrate 1 and the protective layer 4. By setting the tensile modulus of the protective layer 4 with respect to the tensile modulus of the substrate 1 to be equal to or larger than the line represented by $Y = 0.01 \times X^2$ and equal to or smaller than the line represented by $Y = X^{0.4}$ it is possible to prevent the interface between the substrate 1 and the protective layer 4 from being peeled due to the repeated bending, and prevent the dipole antenna 3 from being damaged.

<4. Modification>

Although the embodiments of the present invention have been described above, the present invention is not limited to the above embodiments, and various modifications can be made without departing from the gist of the present invention. A plurality of modifications to be described below can be appropriately combined.

<4-1>

The dipole antenna 3 and the IC chip 2 are covered with only the protective layer 4 in the above embodiment, and a sheet-like cover 5 can be further provided on the protective layer 4 as shown in FIG. 3. The cover 5 can be made of, for example, the same material as the substrate 1. A tensile modulus of the cover 5 is, for example, 0.8 GPa to 8 GPa, and a thickness thereof is, for example, preferably 25 μm to 200 μm, and further preferably 50 μm to 150 μm. Here, when the tensile modulus of the cover 5 is 8 GPa or more, the cover 5 may be cracked at the time of bending, and when the tensile modulus is 0.8 GPa or less, an effect of preventing the deformation of the protective layer 4 is reduced. In addition, similar to the interface between the substrate 1 and the protective layer 4, it is also possible to prevent an interface between the protective layer 4 and the cover 5 from being peeled.

The cover 5 can be provided, for example, as follows. First, the dipole antenna 3 and the IC chip 2 are formed on the substrate 1, and a resin material for the protective layer 4 and a resin material for the cover 5 are laminated thereon in this order. Then, the resin material for the cover 5 is pressed while being heated by a plate. Accordingly, heat and pressure are applied to the resin material for the protective layer 4, and the resin material for the protective layer 4 is bonded to the substrate 1 so as to cover the dipole antenna 3 and the IC chip 2 while being deformed to conform to the shapes of the dipole antenna 3 and the IC chip 2. Further, the resin material for the cover 5 is bonded to the protective layer 4. Thus, the IC tag as shown in FIG. 3 is completed. When such a cover 5 is provided, the protective layer 4 is covered, and thus a stress applied to the protective layer 4 at the time of bending can be dispersed to the cover 5. As a result, a bending resistance of the IC tag can be improved.

<4-2>

The shape of the dipole antenna 3 is an example, and various shapes can be used. A position of the IC chip 2 on the antenna 3 is also not particularly limited. Further, various antennas can be used as the antenna 3, and a patch antenna may also be used in addition to the above dipole antenna. That is, the shape or the like of the antenna 3 is not particularly limited, and various forms are possible.

<4-3>

The shape of the IC tag, that is, the shapes of the substrate 1, the protective layer 4, and the cover 5 are not particularly limited, and various shapes such as a rectangular shape, a circular shape, and a polygonal shape can be adopted in accordance with the application in addition to the elongated shape as described above. The substrate 1, the protective layer 4, and the cover 5 may not have the same shape.

[Examples]

Hereinafter, examples of the present invention will be described. However, the present invention is not limited to these examples.

<1. Preparation of Sample>

IC tags according to Samples 1 to 50 were prepared as follows. Table 1 shows materials, tensile modulus, and thicknesses of substrates used in the production of Samples 1 to 50. Table 2 shows materials, tensile modulus, and thicknesses of protective layers used in the production of Samples 1 to 50. Samples 1 to 50 shown in Table 3 were produced by changing the combination of the substrates and the protective layers. In Samples 1 to 50, sizes of the substrate, the IC chip, and the dipole antenna are the same. That is, on a rectangular substrate of 33.5 mm×7.5 mm made of the material shown in Table 1, an antenna made of silver paste and having a thickness of 10 $\mu$m was formed as shown in FIG. 1, and an IC chip was fixed thereon with an adhesive. Then, the antenna and the IC chip were covered with the protective layer made of the material shown in Table 2.

[Table 1]

| Substrate | Material | Tensile modulus [GPa] | Thickness [$\mu$m] |
|---|---|---|---|
| K1 | 172 manufactured by Tosoh Corporation | 0.20 | 100 |
| K2 | FW10 manufactured by Tosoh Corporation | 0.88 | 100 |
| K3 | 7300A manufactured by Tosoh Corporation | 1.1 | 100 |
| K4 | F113G manufactured by Prime Polymer Co., Ltd. | 1.6 | 100 |
| K5 | TN8050SC manufactured by Teijin Ltd. | 2.2 | 100 |
| K6 | A1030BRL manufactured by Unitika, Ltd. | 2.6 | 100 |
| K7 | A125 manufactured by Unitika, Ltd. | 3.0 | 100 |
| K8 | SD manufactured by Unitika, Ltd. | 3.9 | 100 |
| K9 | 25RN manufactured by Ube Industries | 3.9 | 100 |
| K10 | 125S manufactured by Ube Industries | 7.6 | 100 |

[Table 2]

| Protective layer | Material | Tensile modulus [GPa] | Thickness [$\mu$m] |
|---|---|---|---|
| H1 | EP001K manufactured by Cemedine Co., Ltd. | 0.03 | 50 |
| H2 | AED S manufactured by Arisawa Manufacturing Co., Ltd. | 0.20 | 50 |
| H3 | AU manufactured by Arisawa Manufacturing Co., Ltd. | 0.60 | 50 |
| H4 | E56 manufactured by Shin-Etsu Chemical Co., Ltd. | 0.87 | 50 |
| H5 | FL-290-H manufactured by ADEKA Corporation | 2.0 | 50 |

[Table 3]

| Sample | Substrate | Protective layer | 1000 times bending causing chip side to become convex | 1000 times bending causing chip side to become concave | Evaluation of bending test |
|---|---|---|---|---|---|
| 1 | K1 | H1 | B | B | × |
| 2 | K1 | H2 | B | B | × |
| 3 | K1 | H3 | B | B | × |
| 4 | K1 | H4 | B | B | × |
| 5 | K1 | H5 | B | B | × |
| 6 | K2 | H1 | A | A | ○ |
| 7 | K2 | H2 | A | A | ○ |
| 8 | K2 | H3 | A | A | ○ |
| 9 | K2 | H4 | A | A | ○ |
| 10 | K2 | H5 | A | B | × |
| 11 | K3 | H1 | A | A | ○ |
| 12 | K3 | H2 | A | A | ○ |
| 13 | K3 | H3 | A | A | ○ |
| 14 | K3 | H4 | A | A | ○ |
| 15 | K3 | H5 | A | B | × |
| 16 | K4 | H1 | A | A | ○ |
| 17 | K4 | H2 | A | A | ○ |
| 18 | K4 | H3 | A | A | ○ |
| 19 | K4 | H4 | A | A | ○ |
| 20 | K4 | H5 | A | B | × |
| 21 | K5 | H1 | A | B | × |
| 22 | K5 | H2 | A | A | ○ |
| 23 | K5 | H3 | A | A | ○ |
| 24 | K5 | H4 | A | A | ○ |
| 25 | K5 | H5 | A | B | × |
| 26 | K6 | H1 | A | B | × |
| 27 | K6 | H2 | A | A | ○ |
| 28 | K6 | H3 | A | A | ○ |
| 29 | K6 | H4 | A | A | ○ |
| 30 | K6 | H5 | A | B | × |
| 31 | K7 | H1 | A | B | × |
| 32 | K7 | H2 | A | A | ○ |
| 33 | K7 | H3 | A | A | ○ |
| 34 | K7 | H4 | A | A | ○ |
| 35 | K7 | H5 | A | B | × |
| 36 | K8 | H1 | B | B | × |
| 37 | K8 | H2 | A | A | ○ |
| 38 | K8 | H3 | A | A | ○ |

(continued)

| Sample | Substrate | Protective layer | 1000 times bending causing chip side to become convex | 1000 times bending causing chip side to become concave | Evaluation of bending test |
|---|---|---|---|---|---|
| 39 | K8 | H4 | A | A | ○ |
| 30 | K8 | H5 | A | B | × |
| 41 | K9 | H1 | B | B | × |
| 42 | K9 | H2 | A | A | ○ |
| 43 | K9 | H3 | A | A | ○ |
| 44 | K9 | H4 | A | A | ○ |
| 45 | K9 | H5 | A | B | × |
| 46 | K10 | H1 | B | B | × |
| 47 | K10 | H2 | A | B | × |
| 48 | K10 | H3 | A | A | ○ |
| 49 | K10 | H4 | A | A | ○ |
| 50 | K10 | H5 | A | A | ○ |

<2. Bending Test>

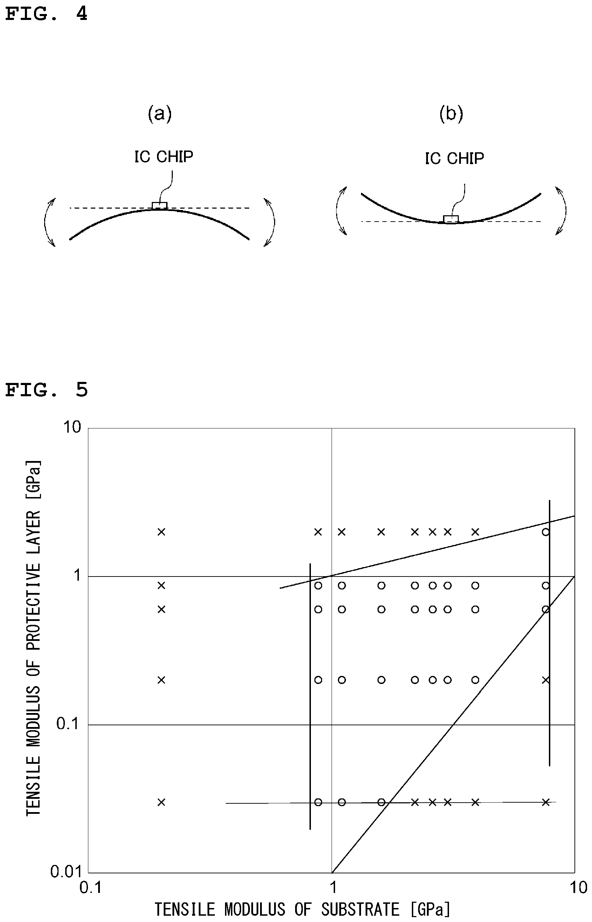

Both sides of the IC tag in a longitudinal direction were held, and as shown in (a) of FIG. 4, the IC tag was bent 1000 times so that a chip side became convex. Further, as shown in (b) of FIG. 4, the IC tag was bent 1000 times so that the chip side became concave. Then, a case in which no peeling occurred between the substrate and the protective layer was evaluated as A, and a case in which peeling occurred between the substrate and the protective layer was evaluated as B. Results are shown in Table 3.

FIG. 5 is a graph showing the results of the bending test, with the tensile modulus [GPa] of the substrate on an X-axis and the tensile modulus [GPa] of the protective layer on a Y-axis. The X-axis represents the tensile modulus [GPa] of the substrate in logarithm, the Y-axis represents the tensile modulus [GPa] of the protective layer in logarithm, and the results of the bending tests of Samples 1 to 50 are shown in a plot. In both the case of the 1000 times bending causing the chip side to become convex and the case of the 1000 times bending causing the chip side to become concave, the case in which no peeling occurred between the substrate and the protective layer was evaluated as A was plotted as ○, and the case in which the peeling occurred between the substrate and the protective layer was evaluated as B in at least one of the case of the 1000 times bending causing the chip side to become convex and the case of the 1000 times bending causing the chip side to become concave was plotted as ×.

In the samples in which the tensile modulus [GPa] of the substrate and the tensile modulus [GPa] of the protective layer are defined within an area surrounded by five straight lines represented by the following formulas (1), (2), (3), (4), and (5), it was confirmed that no peeling occurred between the substrate and the protective layer both in the case of the 1000 times bending causing the chip side to become convex and the case of the 1000 times bending causing the chip side to become concave, and it was found that a bending resistance in the case of being subjected to repeated bending is high.

$$X = 0.8 \quad \ldots (1)$$

$$X = 8 \quad \ldots (2)$$

$$Y = 0.03 \quad \ldots (3)$$

$$Y = X^{0.4} \quad \ldots (4)$$

$$Y = 0.01 \times X^2 \quad \ldots (5)$$

The IC tag according to the present invention has a high bending resistance in the case of being subjected to repeated bending, and is therefore particularly suitable as a laundry tag used for clothes, linen, and the like which are required to have durability against repeated washing or drying in a drying machine. Further, the IC tag is also suitably used for rental mats and mops which are exposed to the repeated washing or chemical treatment.

Reference Signs List

1: substrate
2: IC chip
3: antenna (dipole antenna)
4: protective layer
5: cover

**Claims**

1. An IC tag comprising:

   an IC chip;
   an antenna that electrically transmits and receives information stored in the IC chip;
   a sheet-like substrate that supports the IC chip and the antenna; and
   a resin protective layer which is a dielectric covering the IC chip and the antenna between the resin protective layer and the substrate, wherein
   a tensile modulus [GPa] of the substrate and a tensile modulus [GPa] of the protective layer are defined within an area surrounded by five lines represented by the following formulas (1), (2), (3), (4), and (5), with the tensile modulus of the substrate on an X-axis and the tensile modulus of the protective layer on a Y-axis.

$$X = 0.8 \quad ...(1)$$

$$X = 8 \quad ...(2)$$

$$Y = 0.03 \quad ...(3)$$

$$Y = X^{0.4} \quad ...(4)$$

$$Y = 0.01 \times X^2 \quad ...(5)$$

2. A method for manufacturing an IC tag, comprising:

   a step of forming, on a sheet-like substrate, an IC chip and an antenna that electrically transmits and receives information stored in the IC chip;
   a step of disposing a sheet-like resin material, which is a dielectric, on the substrate to cover the IC chip and the antenna; and
   a step of forming a protective layer along the IC chip and the antenna on the substrate by heating and pressing the resin material, wherein
   the substrate and the resin material are selected such that a tensile modulus [GPa] of the substrate and a tensile modulus [GPa] of the protective layer are defined within an area surrounded by five lines represented by the following formulas (1), (2), (3), (4), and (5), with the tensile modulus of the substrate on an X-axis and the tensile modulus of the protective layer on a Y-axis.

$$X = 0.8 \quad ...(1)$$

$$X = 8 \quad ...(2)$$

$$Y = 0.03 \quad \ldots(3)$$

$$Y = X^{0.4} \quad \ldots(4)$$

$$Y = 0.01 \times X^2 \quad \ldots(5)$$

$$Y = 0.03 \quad \ldots(3)$$

$$Y = X^{0.4} \quad \ldots(4)$$

$$Y = 0.01 \times X^2 \quad \ldots(5)$$

FIG. 1

FIG. 2

FIG. 3

FIG. 4

(a)

IC CHIP

(b)

IC CHIP

FIG. 5

## INTERNATIONAL SEARCH REPORT

| | International application No. |
|---|---|
| | **PCT/JP2023/012599** |

**A. CLASSIFICATION OF SUBJECT MATTER**

***G06K 19/02***(2006.01)i; ***G06K 19/077***(2006.01)i; ***H01Q 9/16***(2006.01)i
FI: G06K19/077 156; G06K19/077 144; G06K19/077 280; G06K19/02 070; H01Q9/16

According to International Patent Classification (IPC) or to both national classification and IPC

**B. FIELDS SEARCHED**

Minimum documentation searched (classification system followed by classification symbols)

G06K19/02; G06K19/077; H01Q9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2006/038438 A2 (OJI PAPER CO., LTD.) 13 April 2006 (2006-04-13)<br>entire text, all drawings | 1-2 |
| A | JP 2019-175195 A (NITTA KK) 10 October 2019 (2019-10-10)<br>entire text, all drawings | 1-2 |
| A | JP 2012-68810 A (TOPPAN PRINTING CO LTD) 05 April 2012 (2012-04-05)<br>entire text, all drawings | 1-2 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012599**

| Patent document cited in search report | | | Publication date (day/month/year) | Patent family member(s) | Publication date (day/month/year) |
|---|---|---|---|---|---|
| WO | 2006/038438 | A2 | 13 April 2006 | (Family: none) | |
| JP | 2019-175195 | A | 10 October 2019 | (Family: none) | |
| JP | 2012-68810 | A | 05 April 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009011041 A